# DEMANDE DE BREVET EUROPEEN

(11) **EP 1 792 773 A1**
(43) Date de publication de la demande: **06.06.2007**
(21) Numéro de dépôt: 06301196.9
(22) Date de dépôt: 30.11.2006
(51) Int. Cl.: B60P 3/04

(54) **Dispositif de largage de sécurité d'une sangle de retenue d'un cheval dans un van**

(30) Priorité: 02.12.2005 FR 0553696; 12.10.2006 FR 0654236
(71) Demandeur: PLF, 24230 Montcaret (FR)
(72) Inventeur: Fautras, Jean-Luc, 47120 Saint Sernin (FR)
(74) Mandataire: Fantin, Laurent

(57) **Abrégé**

L'objet de l'invention est un dispositif de sécurité pour au moins un cheval transporté dans un van, caractérisé en ce qu'il comprend une sangle (68) prévue pour être disposée transversalement derrière le cheval, liée au van et des moyens (70) de largage de ladite sangle (68) par rapport au van.

## Description

La présente invention concerne des dispositifs de sécurité pour les chevaux transportés dans un van et plus particulièrement un dispositif de largage de sécurité d'une sangle de retenue d'un cheval dans un van.

Les vans pour chevaux comprennent un châssis pour permettre la traction sur route par un véhicule et une cellule dans laquelle voyage un cheval mais plus généralement dans laquelle voyagent plusieurs chevaux.

La fabrication de ces vans est relativement longue et coûteuse. Il se trouve que le montage prend un temps important.

De plus, lorsque le van est monté, il faut le convoyer par la route jusqu'au point de vente car le volume est tel qu'il est difficile de les transporter sur camion avec des coûts raisonnables. Ainsi, lorsqu' il est prévu un lieu de fabrication qui approvisionne les points de vente, les délais et les frais d'acheminement peuvent être élevés.

Aussi un des premiers objectifs de la présente invention est de proposer un procédé de réalisation d'un van sur le lieu de vente, l'invention décrit également les éléments nécessaires pour la mise en oeuvre de ce procédé.

Une fois ce van monté, on sait qu'il faut l'équiper pour le confort des chevaux mais aussi pour la sécurité du transport.

Les chevaux voyagent debout et subissent les mouvements du van dans les trois dimensions plus particulièrement latéralement dans les virages et vers l'avant lors des freinages.

Des accessoires existent déjà pour assurer le confort des chevaux et pour éviter qu'ils prennent peur, qu'ils s'excitent et surtout qu'ils ne soient pas blessés lors de mouvements brusques tels qu'un freinage par exemple.

Ainsi, il existe des barres de poitrail placées devant chaque cheval et fixées aux parois du van, de sorte à retenir le cheval lors d'un freinage violent ou simplement puissant.

Par contre, on sait aussi que les chevaux peuvent prendre peur ou simplement s'exciter au point de passer un voire les deux antérieurs par-dessus cette barre de poitrail.

Dans ce cas, on a constaté des blessures éventuelles du cheval d'une part et consécutivement de grosses difficultés pour dégager le cheval de cette situation.

La barre de poitrail, élément de sécurité se trouve devenir une source éventuelle de blessures et de difficultés.

De même, sur l'arrière, le cheval est retenu afin qu'il ne recule pas contre la porte. Généralement les moyens de retenue consistent en une sangle avec mousqueton, liée de part et d'autre de la cellule du van, sur la structure.

Un inconvénient apparaît à l'arrêt lors de la sortie des chevaux car dans certains cas, le cheval est fortement en appui sur l'arrière donc sur la sangle et il peut être difficile de le faire avancer. La tension est telle qu'il est généralement impossible de retirer le mousqueton d'accrochage à la structure.

De plus, l'intervenant se trouve sous la menace d'une ruade, ce qui rend difficile l'approche ou pour le moins qui rend un positionnement adéquat délicat.

En outre, dès la présence de deux chevaux, il est ménagé une cloison de séparation entre les chevaux de sorte à éviter qu'ils ne soient en contact et de plus ils peuvent prendre un léger appui contre cette paroi dans les virages. De fait cette cloison est soumise, même avec un léger appui à des efforts importants. Les cloisons rigides actuelles posent un problème car elles sont solidaires d'un mât central et doivent présenter une raideur certaine pour résister mécaniquement.

Plus généralement ces cloisons sont disposées au droit de la partie haute du cheval, ce qui laisse l'espace inférieur libre et laisse la possibilité aux chevaux de se heurter les pattes, volontairement ou involontairement, surtout dans les virages, s'il y a rattrapage d'équilibre, ce qui peut engendrer là aussi des réactions.

La présente invention propose des aménagements aptes à solutionner ces problèmes.

L'invention est maintenant décrite en détail, en regard des dessins annexés qui présentent sur les différentes figures suivantes un mode particulier de réalisation concernant les différentes caractéristiques évoquées ci-avant.

Ainsi, les figures annexées montrent :
- figure 1A : une vue générale schématique du châssis et des éléments nécessaires pour la réalisation d'un van selon l'invention,
- figure 1B : une vue isolée de dessous du seul châssis,
- figure 2 : une vue de l'intérieur d'un van muni des dispositifs de sécurité selon l'invention,
- figure 3A : une vue de détail de la cloison de séparation,
- figure 3B : une vue de détail des moyens de positionnement,
- figure 4A : une vue de détail de la sangle,
- figure 4B : une vue de détail d'une première variante des moyens de désengagement de la sangle,
- figure 4C : une vue de détail d'une deuxième variante des moyens de désengagement de la sangle,
- figure 5A : une vue en perspective éclatée d'un premier mode de réalisation de la barre de poitrail avec ses moyens de déclenchement,
- figure 5B : une vue de ce premier mode de réalisation de la barre de poitrail avec ses moyens de déclenchement, dans la position enclenchée,
- figure 6A : une vue en perspective éclatée d'un second mode de réalisation de la barre de poitrail avec ses moyens de déclenchement, et
- figure 6B : une vue de ce second mode de réalisation de la barre de poitrail avec ses moyens de déclenchement, dans la position enclenchée,

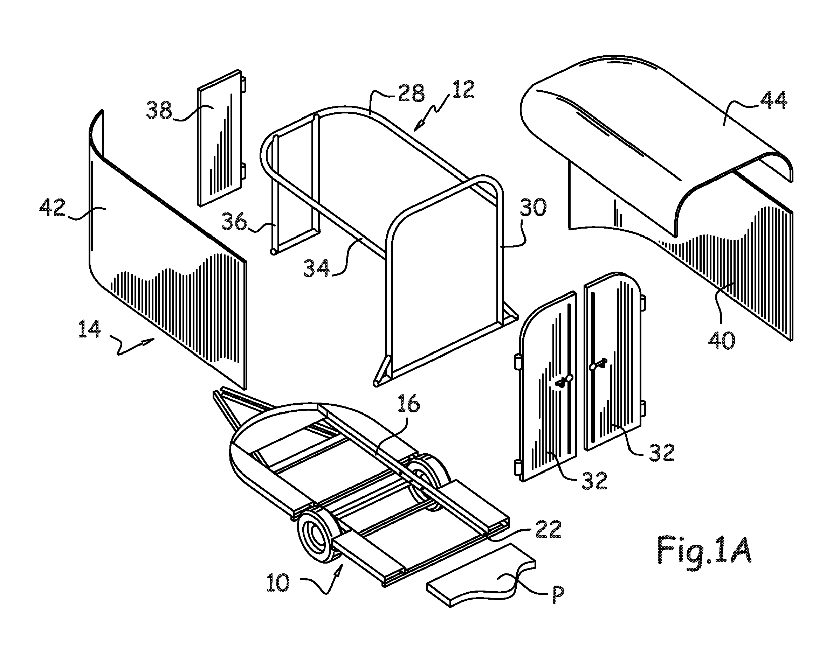

Sur la figure 1A, on a représenté un châssis 10, une structure 12 et un habillage 14 de cellule.

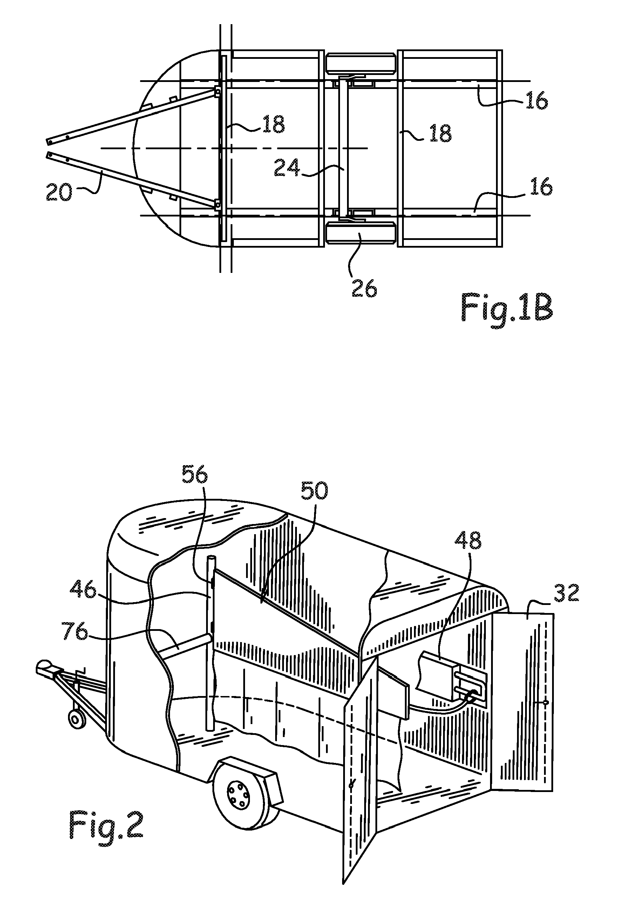

En complétant avec la vue de la figure 1B, on constate que le châssis 10 comprend deux longerons 16, des traverses 18, un timon 20.

On note que, selon un mode de réalisation particulièrement avantageux, les longerons peuvent être des cornières, ce qui permet de loger un plancher P sur les ailes basses 22 de ces longerons d'où un abaissement du plancher avec un gain de la hauteur de chacun des longerons. De façon préférentielle, un essieu 24 avec des roues 26 est rapporté sur ces traverses, solidarisé directement sous les ailes basses 22 portant également le plancher.

La structure 12 comprend une ossature 28 comportant au moins :
- un cadre 30 arrière prévu pour recevoir des portes 32,
- un arceau 34 rigidificateur horizontal, en partie haute, se prolongeant vers l'avant,
- un chambranle 36 prévu pour recevoir une porte 38 avant.

Ces trois pièces cadre 30, arceau 34 et chambranle 36 sont liées entre elles par tout moyen approprié tel que rivetage, vissage, soudage suivant les possibilités techniques, les normes en vigueur, les nécessités de résistance mécanique à atteindre, ce choix étant largement à la portée de l'homme de l'art.

L'habillage 14 de cellule quant à lui est avantageusement constitué d'au moins :
- un premier panneau 40 latéral,
- un second panneau 42 latéral, et
- un panneau 44 de toit.

Ces panneaux sont rapportés sur la structure 12 par tout moyen adapté et notamment par rivetage. Des joints sont également posés de façon connue pour assurer l'étanchéité au droit des bords des panneaux tant entre eux qu'avec la structure 12, avec recouvrement si nécessaire.

De façon préférentielle, les panneaux sont en un matériau composite, léger, de faible épaisseur et de forte rigidité avec une élaboration à partir d'une âme en nid d'abeille et de deux peaux de surfaces. Un tel agencement permet d'atteindre des épaisseurs de 6 à 8 millimètres pour donner un ordre de grandeur.

Les portes arrière 32 et avant 38 sont également fournies avec un montage par emboîtement sur gonds.

Le procédé de réalisation d'un van selon la présente invention consiste à :
- rapporter l'essieu sur le châssis comportant les longerons, les traverses et le timon qui sont de préférence soudés en usine pour des raisons de matériel et de garantie,
- rapporter les arceaux arrière 30 et le chambranle 36 avant,
- rapporter l'arceau 34 horizontal rigidificateur, pour finaliser la structure 12, et
- rapporter les panneaux latéraux 40 et 42 ainsi que le panneau de toit 44 sur ladite structure 12.

La finition consiste à assurer les différentes étanchéités.

On comprend que les différentes pièces peuvent être acheminées aisément du lieu de production avant qu'elles ne soient montées vers le lieu centralisé de distribution. Les pièces se superposent, s'emboîtent et le volume de transport reste réduit puisque le van en 3D n'existe pas encore.

Une fois sur le lieu centralisé de distribution, les pièces sont assemblées et cette opération ne requiert pas de main d'oeuvre hautement spécialisée.

La structure peut ensuite être complétée par tout élément tel qu'un poteau 46 central et des flancs 48 solidaires des parois latérales.

Dans le mode de réalisation représenté concernant un van à deux chevaux, il est aussi prévu une cloison 50 de séparation.

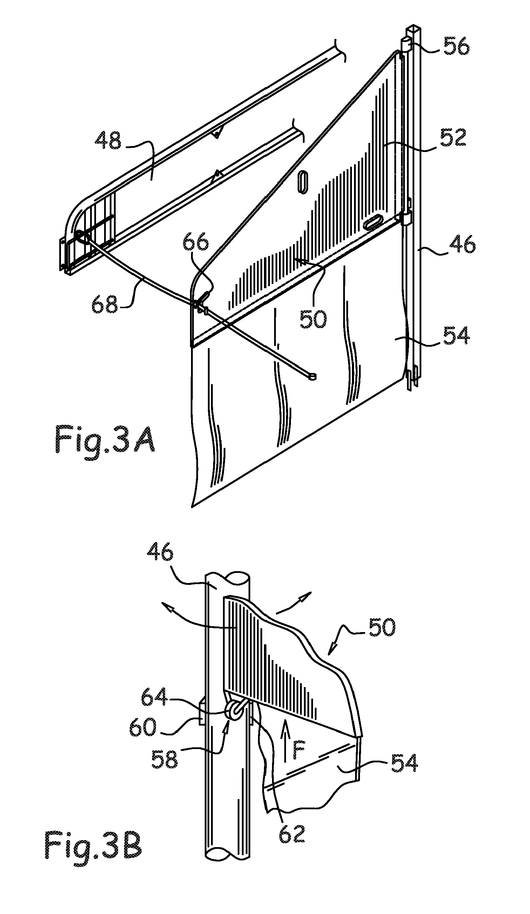

Comme montré sur la figure 3A, cette cloison 50 de séparation comprend un panneau 52 rigide sensiblement triangulaire rectangle, sous la base duquel est disposée une jupe 54 souple, par exemple en matière plastique épaisse qui se prolonge à proximité du plancher.

Cette cloison de séparation est rapportée par le petit côté du triangle sur une génératrice ou sur un côté du poteau 46 central suivant le profil de sa section.

La fixation est pivotante avec au moins une charnière 56 et des moyens pour éviter le dégondage intempestif mais autorisant le démontage.

De plus, il est prévu des moyens 58 de positionnement droit ou gauche par gravité. Ces moyens sont montrés en détail sur la figure 3B. Il est nécessaire pour cela de disposer d'un débattement vertical des charnières sur une hauteur limitée et dans la tolérance des moyens pour éviter le dégondage.

Ces moyens 58 de positionnement comprennent en pied de la cloison 50 des butées 60 et 62 de part et d'autre du plan médian, solidaire du poteau et avec un galet 64 monté rotatif et apte à rouler au-dessus de l'une ou l'autre des butées. Ce passage au-dessus d'une butée est possible uniquement sous l'action d'une force suffisante puisque le passage du galet sur une des butées engendre le soulèvement de la cloison toute entière, sur une course limitée. On note que cette manoeuvre génère un point dur tout à fait adapté pour maintenir la paroi en place d'un côté ou de l'autre lorsque l'on souhaite dégager l'espace médian, ceci par simple mouvement sans accrochage d'aucune sorte et sans agencement complexe et sans pièce en saillie sur les parois.

Dans l'extrémité libre de la cloison, sur l'arrière, il est ménagé une lumière 66.

Cette lumière 66 peut comporter deux fentes 66-1 et 66-2, disposées à différentes hauteurs de sorte à permettre un réglage en fonction du gabarit du cheval.

En effet, cette lumière laisse passer une sangle 68 amovible et prévue pour être disposée transversalement derrière les chevaux, en prenant attache sur les parois de la cellule, par exemple avec un mousqueton.

Plus particulièrement, dans la présente invention il est prévu des moyens 70 de largage de ladite sangle, plus exactement du mousqueton de la sangle lorsqu'elle en est munie.

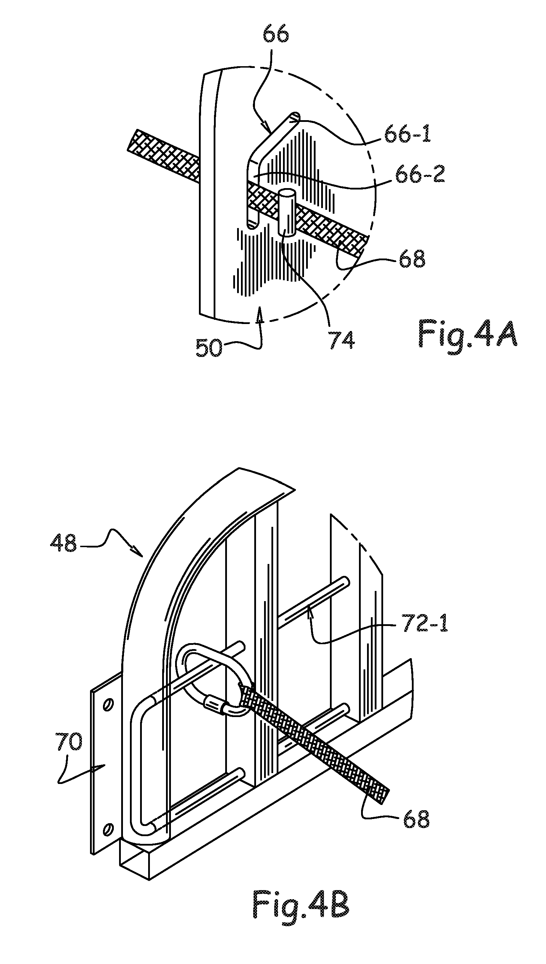

Selon une première variante, illustrée en figure 4B, ces moyens 70 de largage sont actionnables depuis l'arrière du van et comprennent en l'occurrence au moins une épingle 72-1 de forme en *C* qui coopère à translation dans des trous ménagés pour les recevoir dans au moins une paroi latérale du van, ou un flanc 48 solidaire d'une paroi latérale. L'épingle est orientée dans un plan parallèle à celui de la paroi, ouverture vers l'avant. Cette épingle peut donc être retirée par l'arrière en exerçant une traction sur la branche verticale du *C*, libérant ainsi le mousqueton de la sangle.

Selon cette première variante des moyens 70 de largage, le débarquement d'un cheval par une personne seule nécessite un déplacement à l'arrière du van pour détacher ladite sangle. Afin d'éviter que le cheval ne « tire au renard », le débarquement s'effectue en détachant le cheval à l'avant, en ouvrant le van à l'arrière et en larguant la sangle 68, puis en revenant à l'avant pour tenir le cheval lors du recul. En cas de débarquement d'un cheval par une personne seule, il y a risque que le cheval ne s'échappe pendant que la personne revient à la tête du cheval pour le détacher et le faire reculer.

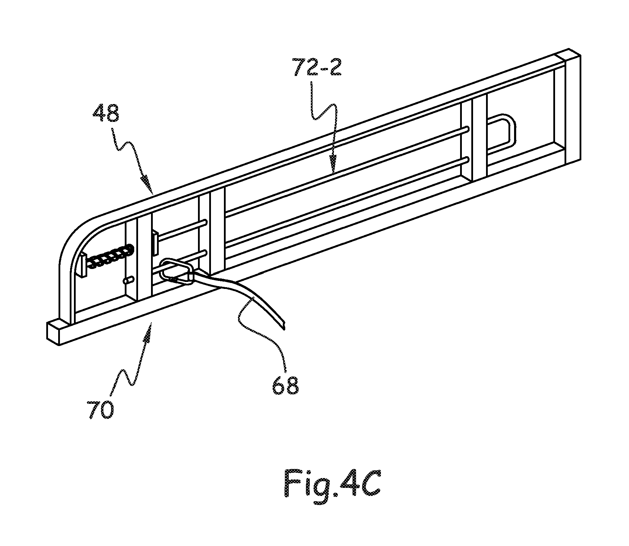

Ainsi, selon une deuxième variante, illustrée en figure 4*C*, ces moyens 70 de largage sont actionnables depuis l'avant du van et comprennent en l'occurrence au moins une épingle 72-2 de forme en *C* qui coopère à translation dans des trous ménagés pour les recevoir dans au moins une paroi latérale du van ou un flanc 48 solidaire d'une paroi latérale, et éventuellement des moyens de rappel R. Les moyens de rappel R peuvent se présenter, par exemple et comme illustré en figure 4*C*, sous la forme d'un ressort utilisé en compression. L'épingle est orientée dans un plan parallèle à celui de la paroi, ouverture vers l'arrière. Cette épingle peut donc être retirée par l'avant en exerçant une traction sur la branche verticale du *C*, libérant ainsi le mousqueton de la sangle. Cette traction est exercée manuellement ou par tout mécanisme de manoeuvre adapté.

Selon cette deuxième variante des moyens 70 de largage, le débarquement d'un cheval par une personne seule peut s'effectuer de manière plus sécurisée. Ainsi, après avoir ouvert le van à l'arrière, une personne seule restant à la tête du cheval peut détacher ledit cheval de l'avant, larguer la sangle 68 arrière et tenir le cheval pour le faire reculer sans qu'il ne puisse s'échapper et en évitant qu'il ne « tire au renard ».

Plus particulièrement les trous de passage des branches du *C* sont ménagés dans les flancs 48 lorsqu'il en est prévu.

Cette sangle 68 porte aussi des limiteurs 74 réglables de sorte à réduire le débattement angulaire lorsque les chevaux sont en place.

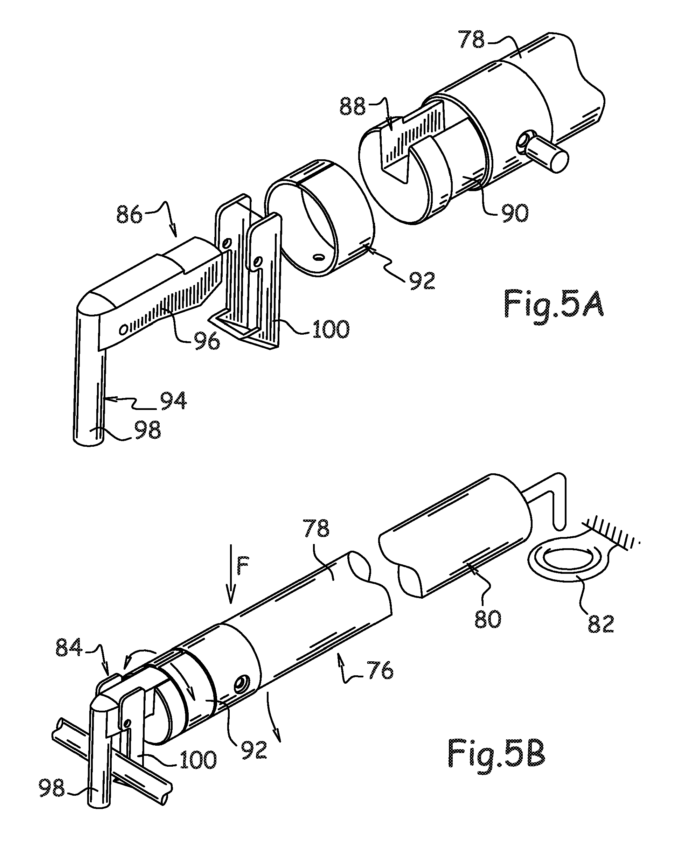

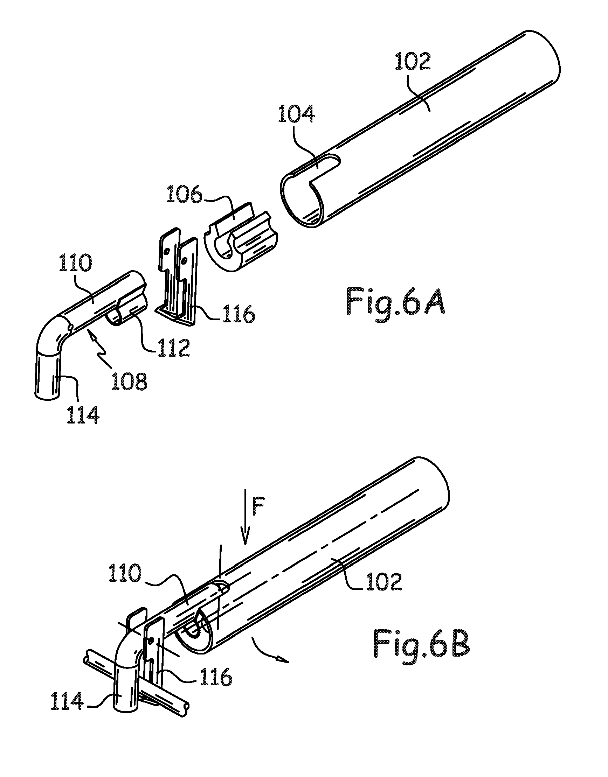

Ainsi que représenté sur la figure 2, il est aussi prévu au moins une barre 76 de poitrail. Cette barre, détaillée sur les figures 5 et 6, est disposée à l'avant, transversalement, devant le poitrail du cheval concerné.

Sa mise en place s'effectue avant l'introduction du cheval dans le van et doit être une opération simple, par simple emboîtement.

La barre 76 selon l'invention comprend un tube 78 portant à l'une des extrémités une liaison, par exemple un crochet 80 prévu pour venir coopérer avec un anneau 82 solidaire du poteau fixe par exemple. La liaison doit être du type articulé. A l'autre extrémité, il est prévu des moyens 84 d'échappement.

Ces moyens 84 d'échappement sont réalisés suivant deux modes préférentiels de réalisation.

Le premier mode, objet des figures 5A et 5B comprend une tête 86 solidaire du tube 78 par clavetage par exemple. Cette tête comprend une rainure 88 borgne orientée longitudinalement par rapport à la barre et une gorge 90 périphérique de faible profondeur. Cette rainure est ouverte vers le haut lorsque la tête est fixée sur la barre.

La rainure 88 borgne possède un fond de rainure avec une double pente en Vé.

Une bague ressort 92 de profil circulaire fendu, est logée dans cette gorge périphérique 90, venant affleurer, dans la continuité de la barre.

Un crochet 94 est associé à cette tête qui comprend un corps 96 de profil conjugué de celui de la rainure 88 borgne et notamment avec une face en vis-à-vis du fond de rainure qui est aussi avec un profil en forme de Vé.

Ce crochet comporte aussi un doigt 98 perpendiculaire, adapté pour venir pénétrer dans un anneau fixe solidaire de la paroi si le crochet à l'autre extrémité coopère avec un anneau du poteau fixe.

De plus, pour éviter le désengagement intempestif, notamment sous l'action du cheval, il est prévu une sécurité par exemple un croc 100, monté pivotant autour d'un axe de sorte que, sous l'effet la gravité, sa partie courbe vienne au contact du doigt interdisant le désengagement. Il est à noter par contre que la mise en place s'effectue automatiquement car le croc 100 s'écarte lors de l'introduction du doigt.

L'agencement selon ce mode de réalisation, fonctionne de la façon suivante.

Le crochet 94 est introduit dans la rainure 88 borgne, en force, et la bague ressort 92 exerçant son effort radial plaque le corps 96, en faisant coopérer les deux Vé.

Le crochet 94 est ainsi parfaitement maintenu en translation et son pivotement est interdit par la bague ressort.

La barre est mise en place avec les crochets des deux extrémités dans les anneaux fixes respectifs. On entend par anneau également une simple barre sur laquelle le doigt peut être crocheté.

Par contre, lorsque le cheval vient à passer au moins un antérieur de l'autre côté et se trouve à exercer un effort très important sur la barre, du haut vers le bas le crochet est amené à pivoter et la bague ressort fendue s'ouvre laissant échapper le crochet.

La barre avec sa tête n'est plus liée au crochet 94 qui, lui, reste lié à l'anneau sur lequel il est fixé.

De fait, le cheval se trouve libéré instantanément.

On note que tout mouvement vers l'avant ne provoque pas d'échappement puisque le corps est maintenu dans la rainure ouverte vers le haut. La barre de poitrail joue donc bien son rôle de retenue.

Selon une variante représentée sur les figures 6A et 6B, la barre 102 comprend une découpe 104 débouchante, centrée sur la génératrice supérieure.

Un insert 106 en élastomère présente un profil en *C* ouvert, les extrémités des deux branches étant affinées avec un retrait de matière. Les dimensions de cet insert sont telles qu'il se loge dans le tube.

Un crochet 108 comprend un corps 110 cylindrique muni d'un ergot 112 de profil conjugué de celui de l'intérieur du profil en *C.*

Le corps 110 se prolonge par un doigt 114 apte à coopérer avec un anneau fixe comme pour la première variante.

Un croc 116 est monté pivotant autour d'un axe et déporté de sorte à venir en appui sous l'effet de la gravité contre le doigt 114.

Le fonctionnement est identique à celui de la première variante mais dans ce cas, le crochet est séparé par dégagement de l'ergot 112 hors de l'insert 106 par compression dudit insert, compression rendue possible par le profil aminci des extrémités, le retrait de matière et par la capacité de l'élastomère à se comprimer.

En fonction de la dureté de l'élastomère, des dimensions, de l'amincissement, l'homme de l'art est à même de déterminer une force d'échappement adaptée.

Ces dispositifs de sécurité permettent d'apporter un confort à l'utilisateur dans ses différentes interventions.

## Revendications

1. Dispositif de sécurité pour au moins un cheval transporté dans un van, **caractérisé en ce qu'**il comprend une sangle (68) prévue pour être disposée transversalement derrière le cheval, liée au van et des moyens (70) de largage de ladite sangle (68) par rapport au van.

2. Dispositif de sécurité pour au moins un cheval transporté dans un van selon la revendication 1, **caractérisé en ce que** les moyens (70) de largage sont actionnables depuis l'avant du van, notamment à proximité de la tête d'un cheval.

3. Dispositif de sécurité pour les chevaux transportés dans un van selon la revendication 2, **caractérisé en ce que** les moyens de largage comprennent au moins une épingle (72) de forme en *C* qui coopère à translation dans des trous ménagés pour les recevoir, ladite épingle étant orientée dans un plan parallèle à celui de la paroi du van, ouverture vers l'arrière.

4. Dispositif de sécurité pour au moins un cheval transporté dans un van selon la revendication 1, **caractérisé en ce que** les moyens (70) de largage sont actionnables depuis l'arrière du van.

5. Dispositif de sécurité pour les chevaux transportés dans un van selon la revendication 4, **caractérisé en ce que** les moyens de largage comprennent au moins une épingle (72) de forme en *C* qui coopère à translation dans des trous ménagés pour les recevoir, ladite épingle étant orientée dans un plan parallèle à celui de la paroi du van, ouverture vers l'avant.

6. Dispositif de sécurité pour les chevaux transportés dans un van selon l'une quelconque des revendications 3 ou 5, **caractérisé en ce que** les trous de réception des moyens de largage sont réalisés dans au moins une paroi latérale du van ou dans un flanc (48) solidaire d'une paroi latérale.

7. Dispositif de sécurité pour les chevaux transportés dans un van selon l'une des revendications précédentes, **caractérisé en ce que** les moyens (70) de largage comprennent des moyens de rappel R.

8. Dispositif de sécurité pour les chevaux transportés dans un van selon l'une des revendications précédentes, **caractérisé en ce que**, dans le cas d'un van avec une cloison (50) de séparation, la cloison (50) comporte une lumière (66) de passage de la sangle (68), munie de deux fentes (66-1, 66-2), disposées à différentes hauteurs de sorte à permettre un réglage de cette sangle.
